# EUROPEAN PATENT APPLICATION

(11) **EP 2 075 479 A1**
(43) Date of publication of application: **01.07.2009**
(21) Application number: 07150413.8
(22) Date of filing: 24.12.2007
(51) Int. Cl.: F16C 17/04, F16C 33/38, F16C 33/46, F16C 33/66, F16C 43/06

(54) **Thrust bearing cage**

(71) Applicant: Aktiebolaget SKF, 415 50 Göteborg (SE)
(72) Inventor: Finetti, William, 10040 La Loggia (Torino) (IT); Gallucci, Francesco, 10040 Volvera (Torino) (IT); Restivo, Riccardo, 10144 Torino (IT); Lazzari, Tommaso, 10121 Torino (IT)
(74) Representative: Fioravanti, Corrado

(57) **Abstract**

A thrust bearing cage (10) has an overall annular shape with first (15) and second (16) axially opposite faces and circumferentially equally spaced openings (11) extending between those opposite faces for retaining rolling bodies (21) spaced from one another along the washers (22, 23) of a thrust bearing unit (20). Each opening (11) includes a main portion (12) comprising one or more surfaces shaped as part of the surface of a solid of revolution for contacting one of the rolling bodies (21) and one or two recessed surfaces (13a, 13b) defining one or two recessed passages (14a, 14b) extending between the axially opposite faces (15, 16) so as to improve lubrication and heat dissipation.

## Description

The present invention refers to a cage for an axial or thrust bearing.

Thrust bearings consist of two washers or rings and a set of rolling bodies circumferentially equally spaced along the washers by a retainer, usually a machined brass cage or an injection moulded cage of glass fibre reinforced polyamide. In a thrust ball bearing, the bearing balls are each fitted in a rounded pocket of the retainer cage shaped as a spherical zone. This invention refers to cages having the overall shape of an annular disc or cone mounted between the bearing washers or rings.

As known to those skilled in the art, correct lubrication of the inner parts of the bearing involved with rolling contact is of primary importance for a smooth operation of the bearing. Excessive friction occurring between the rolling bodies and the pockets of the cage adversely affects efficiency and, in the long term, will eventually cause the bearing to lock.

A main object of this invention is to provide a cage which can improve and permanently guarantee appropriate delivery and diffusion of the lubricant onto the rolling bodies for the whole lifetime of a thrust bearing unit.

Another object of the invention is to provide a cage which can increase heat dissipation within a thrust bearing unit.

The above and further objects and advantages are achieved, according to the invention, by a thrust bearing cage as defined in the appended claims. Briefly summarized, the present invention is directed to a thrust bearing cage having the overall shape of an annular disc or an annular cone with first and second axially opposite faces and a number of circumferentially equally spaced pockets extending between those opposite faces for retaining the rolling bodies (e.g. bearing balls or rollers) spaced from one another along the washers of a thrust bearing unit. Each pocket includes a main portion with surfaces intended to contact one of the rolling bodies and one or more recessed surface defining one or more recessed passages which extend between the axially opposite faces of the cage. The lubricant oil or grease will penetrate those passages and spread over the surface of a bearing ball.

Other features and advantages of the invention will become apparent to those skilled in the art upon review of the following detailed description, claims and drawings in which like numerals are used to designate like features.

A preferred, but not limiting embodiment the invention will now be described, reference being made to the accompanying drawings, in which:
Figure 1 is a perspective view of an embodiment of a cage according to the invention;
Figure 2 is a plan view of the cage of figure 1;
Figure 3 is a cross sectional view taken along the line III-III in figure 2;

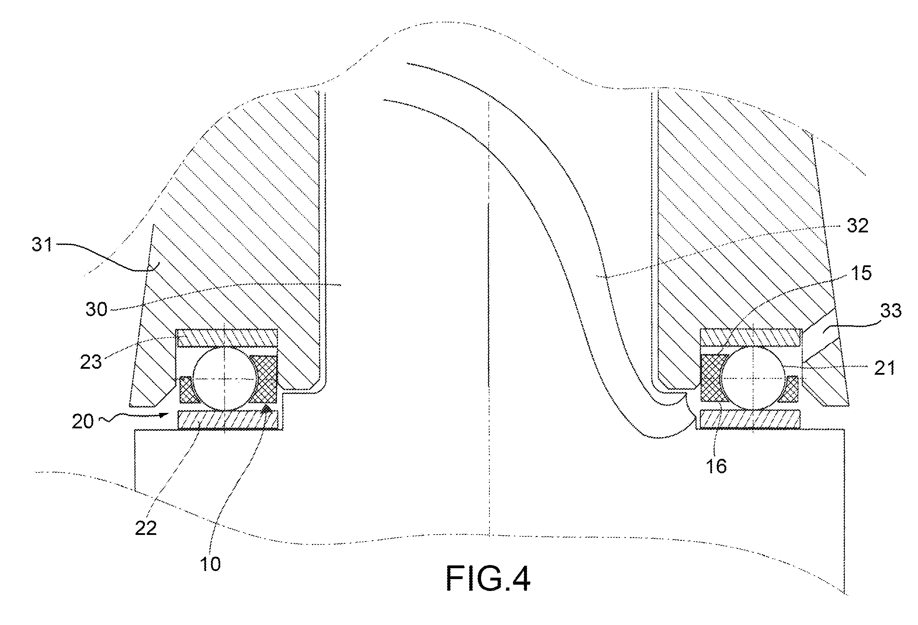

Figure 4 is an axial cross sectional view of a thrust ball bearing equipped with the cage of figure 1 and fitted between a shaft and a housing.

Before an embodiment of the invention is explained in detail, it is to be understood that the invention is not limited in its application to the details of construction and the arrangement of the components set forth in the following description or illustrated in the drawings. The invention is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

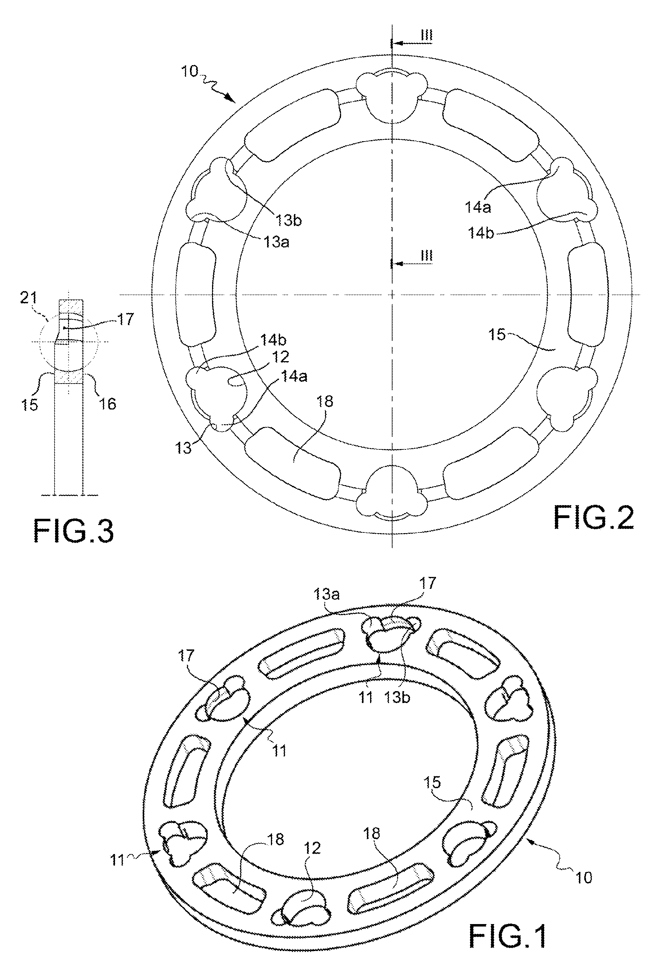

Referring initially to Figures 1 to 3, there is depicted an exemplary cage 10 of the present invention. In the exemplary embodiment, the cage 10 has the overall shape of an annular disc made as a single piece of a plastic material, such as nylon 6/6, or a composite, such as glass fibre reinforced polyamide. The cage 10 forms a number of circumferentially equally spaced openings or pockets 11 for retaining bearing balls 21 circumferentially spaced from one another along the raceways of a thrust ball bearing unit 20. As used herein, terms such as circumferential, radial, or axial are to be construed with respect to the central axis of rotation of the cage and the bearing to which the cage is fitted.

The bearing unit 20 also comprises two relatively rotatable washers, namely a shaft washer 22 and a housing washer 23, in this example fixed to a shaft 30 and a housing 31, respectively. Lubricating channels 32, 33 are formed through the shaft and the housing for providing a lubricating oil circulation through the bearing 20.

Each opening 11 has a main, partially spherical ball retaining portion 12 for contacting the bearing balls. More generally, the retaining portion 12 is shaped as part of the surface of a solid of revolution corresponding to that the rolling bodies. In the illustrated example, for a thrust ball bearing, the main portion 12 for contacting the bearing balls takes the shape of a spherical zone. According to the invention, in order to improve lubrication of those surfaces at the interface between the cage and the bearing balls, each opening 11 also forms at least one, but preferably two further recessed surfaces 13a, 13b extending into the body of the cage. The recessed surfaces 13a, 13b cannot be contacted by the bearing balls and each define a small recessed passage 14a, 14b extending from the upper face 15 to the axially opposite, lower face 16 of the cage. The lubricant oil will penetrate those passages and spread over the surface of a bearing ball.

In each opening or pocket 11, the recessed surfaces are preferably located towards or close to the radially outer perimeter of the cage, since rotation of the cage and other rotating parts of the bearing will centrifuge the lubricant oil in a radially outward direction. Consequently, a radially outer location of the recessed surfaces 13a, 13b will collect more oil and therefore induce or increase oil circulation within the bearing, particularly over the bearing balls and other surfaces in rolling contact therewith, specifically the ball retaining portions 12 of the cage pockets 11.

In the illustrated embodiment, two lobe-shaped passages 14a, 14b are provided circumferentially spaced from one another in each opening 11 close to the outer perimeter. This arrangement of the passages, symmetrical with respect to a radial plane passing through the centre of each opening 11, ensures best lubrication. Regardless of the direction of rotation of the bearing, one of the two recessed surfaces 13a, 13b will be the trailing one, which will collect more lubricant than the leading one.

With the aim of improving the insertion of the balls in the pockets 11, a part 17 of the main portion 12 of each opening 11 is cylindrical instead of spherical. The cylindrical surface 17 extends upwards intermediate the recessed surfaces 13a, 13b from a mid plane or equatorial plane passing through the centre of the spherical portion 12.

Also, thanks to the recesses, the oil flow through the bearing can be increased. When more oil is passing through the bearing, more heat, generated by the bearing itself or by surrounding components, can be dissipated. This improved heat dissipation capacity allows a higher rotational speed and/or a lower bearing operating temperature.

Alternately arranged between two consecutive openings 11 are arched slots 18 for reducing the weight of the cage and further increase the oil flow through the bearing.

It will be appreciated that the present invention ensures that a significant quantity of lubricant will be permanently available onto those surfaces of the bearing, particularly of the cage, involved with rolling contact.

Variations and modifications of the foregoing are within the scope of the present invention. Those skilled in the art will readily recognize that the invention is equally applicable to bearing units of different designs. For example, the principle underlying the invention may be advantageously applied also to bearings of different kind, for example angular contact thrust ball bearings, cylindrical or tapered roller bearings, needle roller bearings, etc. Finally, it will be understood that the main portions designated at 12 and intended to contact the rolling bodies will take different shapes, depending on and corresponding to the shape of the solid of revolution of the rolling bodies, for example cylindrical, cone-shaped, barrel-shaped, etc.

## Claims

1. A thrust bearing cage (10) having an overall annular shape with first (15) and second (16) axially opposite faces and a plurality of circumferentially equally spaced openings (11) extending between said opposite faces for retaining rolling bodies (21) spaced from one another along the washers (22, 23) of a thrust bearing unit (20),
**characterised in that** each opening (11) includes
a main portion (12) comprising one or more surfaces shaped as part of the surface of a solid of revolution for contacting one of the rolling bodies (21) and
at least one, recessed surface (13a, 13b) defining a recessed passage (14a, 14b) extending between said axially opposite faces (15, 16).

2. A cage according to claim 1, **characterised in that** in each opening or pocket 11, the recessed surfaces are located close to a radially outer perimeter of the cage.

3. A cage according to claim 1 or 2, **characterised in that** each pocket (11) includes two of said recessed surfaces (13a, 13b) each defining a recessed passage (14a, 14b) extending between said axially opposite faces (15, 16).

4. A cage according to claim 3, **characterised in that** the two passages (14a, 14b) are provided circumferentially spaced from one another in each opening (11) close to an outer perimeter of the cage.

5. A cage according to claim 4, **characterised in that** the two passages (14a, 14b) are arranged symmetrically with respect to a radial plane passing through the centre of each opening (11).

6. A cage according to claim 1, having the overall shape of an annular disc or cone.

7. A cage according to claim 1, **characterised in that** the recessed surface (13a, 13b) and the recessed passage (14a, 14b) are so shaped as to allow lubricant oil to penetrate that passages and spread over the surface of a rolling body (21).

8. A thrust bearing unit including a cage according to any of the preceding claims.
